# EUROPEAN PATENT SPECIFICATION

(11) **EP 0 752 539 B1**
(45) Date of publication and mention of the grant of the patent: **11.12.2002**
(21) Application number: 96304971.3
(22) Date of filing: 05.07.1996
(51) Int. Cl.: F16C 35/06

(54) **Bearing assembly and method of manufacturing the same**
Lageranordnung und ihr Herstellungsverfahren
Dispositif de palier et méthode de sa fabrication

(30) Priority: 07.07.1995 JP 19614195
(43) Date of publication of application: 08.01.1997
(73) Proprietor: MINEBEA KABUSHIKI-KAISHA, Kitasaku-gun, Nagano-ken (JP)
(72) Inventor: Obara, Rikuro. c/o Minebea K.-K., Nagano-ken, (JP)
(74) Representative: Warren, Anthony Robert

(56) References cited:
- EP-A- 0 095 561
- EP-A- 0 591 587
- WO-A-95/03207
- DE-A- 3 101 596
- DE-U- 9 104 218
- FR-A- 2 531 924

## Description

The present invention relates to a bearing assembly and a method of manufacturing the same. The bearing assembly may be used in the rotating portions of a computer and/or its peripheral devices.

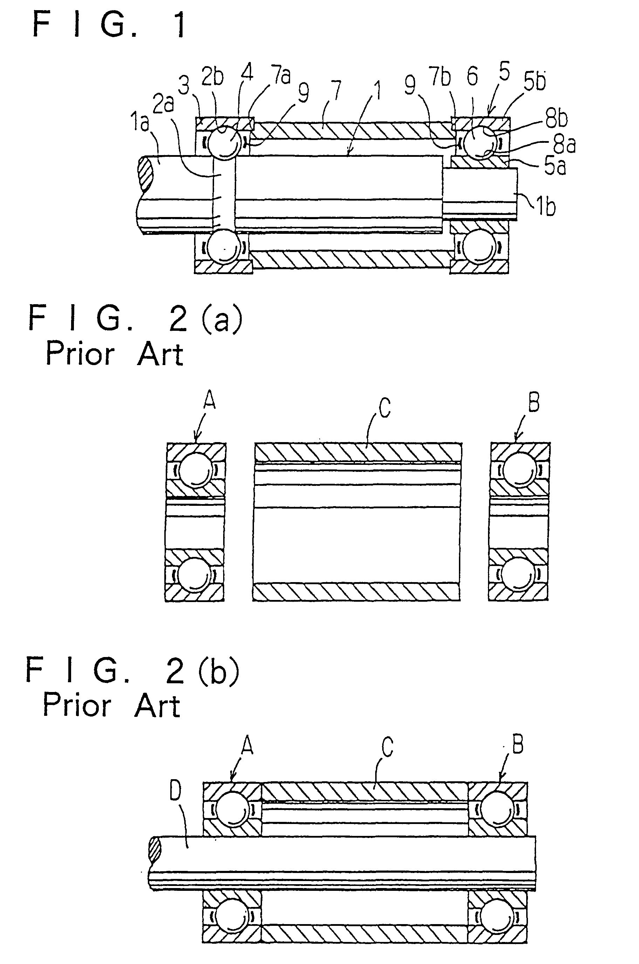

In a conventional bearing assembly, in which a pair of ball bearing units A, B are mounted on a rotary shaft D of rotating portions of a computer or its peripheral devices, as shown in Figs. 2(a) and (b), it is necessary to produce the components of the assembly separately. Consequently, a sleeve-like spacer C and the pair of ball bearing units A, B are produced separately from each other. These components A, B, C of the conventional bearing assembly are then delivered to a user. After receipt of the components, the user mounts the components A, B, C on the rotary shaft D to complete the conventional bearing assembly, as shown in Fig. 2(b).

As described above, in the conventional bearing assembly, it is necessary for the user or customer, such as the manufacturer or assembler of the computers or peripheral devices, to mount the pair of ball bearings units A, B and the spacer C on the rotary shaft D with the ball bearing units A, B spaced apart from each other by the spacer C. Consequently, the conventional bearing assembly suffers from the following problems:
(a) While it needs to possess sufficient rigidity, the rotary shaft D is also required to have an outer diameter which is small enough to cooperate with the inner race rings of the ball bearing units A, B;
(b) Since the spacer C is a separate component independent of the pair of ball bearing units A and B, it is necessary for the opposite end surfaces of the spacer C to be machined or otherwise worked to improve their mutual parallelism and also their flatness, in relation to the dimensions of the ball bearing units A, B being assembled together with the spacer C; and
(c) Since the spacer C is merely sandwiched between the outer race rings of the two ball bearing units A and B, it is necessary for the user to coaxially mount the spacer C on the rotary shaft D with a high degree of accuracy.

A further prior art bearing assembly for use in office automation equipment (on which the preamble of claim 1 is based) is described in patent EP-A-0591587. The bearing includes a one-piece sleeve in which first and second outer ball bearing raceways are formed. A first row of balls runs between the first outer raceway and an inner raceway formed directly in an outer surface of a larger-diameter portion of a shaft journalled for rotation within the sleeve. A second row of balls runs between the second outer raceway and an inner raceway formed in an inner ring mounted on a smaller diameter portion of the shaft. The outer sleeve of this bearing assembly, with two raceways formed in its inner surface, is difficult to manufacture with sufficient accuracy and leads to complications in the assembly of the bearing components.

It is an object of the present invention to alleviate or effectively solve the above problems by providing a bearing assembly and a method of manufacturing the same, the bearing assembly being capable of being easily mounted in rotating portions of a computer and/or its peripheral devices at the user's end or production line.

According to one aspect of the present invention, there is provided a bearing assembly comprising:
a stepped-diameter shaft provided with a portion having a larger diameter than another portion of the shaft, and an annular inner raceway groove formed directly in the outer peripheral surface of the larger-diameter portion;
a first outer race ring coaxially disposed around said larger-diameter portion of said stepped-diameter shaft and spaced apart therefrom to form an annular space therebetween, said first outer race ring having its inner peripheral surface formed with an outer raceway groove;
a plurality of first balls rotatably mounted in said annular space, between and engaging the inner raceway groove in the shaft and said annular outer raceway groove of said first outer race ring; and
a sleeve-like spacer;
a ball bearing unit which has a second outer race ring and an inner race ring mounted on the smaller-diameter portion of said shaft, said spacer being coaxially disposed around said shaft while spaced apart therefrom, and extending axially between said first outer race ring and said second outer race ring of said ball bearing unit which is provided with a plurality of second balls between said inner race ring and second outer race ring;
whereby said first outer race ring, said spacer, said plurality of first balls, said ball bearing unit, and said shaft are assembled into a bearing assembly,
characterised in that said spacer is provided with a pair of reduced-diameter portions at its opposite axial end portions, one of the reduced-diameter portions having an outer diameter equal to an inner diameter of said first outer race ring and being fitted in said first outer race ring and the other reduced-diameter end portion having an outer race ring of the ball bearing unit and being fitted in said second outer race ring and one end surface of said spacer is fitted closely to an axial end surface of said first outer race ring and an opposite end surface of said spacer is fitted closely to an axial end surface of said second outer race ring.

.In one embodiment, the outer diameter of the inner race ring of the ball bearing unit is the same as that of the large-diameter portion of the stepped-diameter shaft, and the outer and inner diameters of the second outer race ring of the ball bearing unit are the same as those of the first outer race ring, respectively, whereby the first and the second balls are of the same diameter.

The bearing assembly may also include a ball retainer coaxially and rotatably mounted in the annular space to rotatably retain the first balls therein.

According to another aspect of the present invention, there is provided a method of manufacturing a bearing assembly, comprising the steps of:
forming an annular inner raceway groove directly in the outer peripheral surface of a portion of a stepped-diameter shaft, which portion has a larger diameter than another portion of the shaft;
mounting a plurality of first balls in an annular space defined between said annular inner raceway groove of said shaft and an annular outer raceway groove formed in the inner peripheral surface of a first outer race ring which is coaxially disposed around the larger-diameter portion of said shaft so as to be disposed opposite said annular inner raceway groove of said shaft;
coaxially mounting a sleeve-like spacer around said shaft so as to be spaced apart therefrom, said spacer being provided with a pair of reduced-diameter portions at its axial end portions and having one of its reduced-diameter portions having an outer diameter equal to an inner diameter of said first outer race ring and coaxially fitted in said first outer race ring;
slidably mounting the other of said reduced-diameter portions of said spacer having an outer diameter equal to an inner diameter of a second outer race ring of a ball bearing unit provided with a plurality of second balls and an inner ring in said second outer race ring said ball bearing unit having its inner race ring slidably mounted on the smaller-diameter portion of said shaft;
closely fitting one end surface of said spacer to an axial end surface of said first outer race ring and closely fitting an opposite end surface of said spacer to an axial end surface of said second outer race ring; and
bonding or otherwise fixing said inner race ring of said ball bearing unit to said smaller-diameter portion of said shaft by means of an adhesive or other connecting means in a condition in which a predetermined axially inward pre-load is applied to the outer end surface of said inner race ring or said second outer race ring of said ball bearing unit;
whereby said first outer race ring, said spacer, said plurality of first balls, said ball bearing unit and said shaft are assembled into a bearing assembly.

Reference will now be made to the accompanying drawings, in which:-
Fig. 1 is a longitudinal sectional view of an embodiment of a bearing assembly of the present invention;
Fig. 2(a) is a longitudinal sectional view of the components of a conventional bearing assembly, i.e, a pair of ball bearing units and a spacer, from which the bearing assembly is assembled; and
Fig. 2(b) is a longitudinal sectional view of the conventional bearing assembly after completion of assembly operation thereof, with the ball bearing units and the spacer properly mounted on a shaft.

Fig. 1 shows an embodiment of a bearing assembly of the present invention.

As shown in Fig. 1, a stepped-diameter shaft 1 is provided with a relatively large-diameter portion 1a and a relatively small-diameter portion 1b. An annular inner raceway groove 2a is formed directly in the outer peripheral surface of the large-diameter portion la.

An outer race ring 3 is disposed opposite the inner raceway groove 2a, and is provided with an annular outer raceway groove 2b in its inner peripheral surface. A plurality of balls 4 are rotatably mounted between the inner raceway groove 2a of the shaft 1 and the outer raceway groove 2b of the outer race ring 3.

A ball bearing unit 5 comprising an inner race ring 5a, an outer race ring 5b and a plurality of balls 6 rotatably mounted between the race rings 5a and 5b, has its inner race ring 5a fixedly mounted on the small-diameter portion 1b of the shaft 1 in an insertion manner.

A sleeve-like spacer 7 is arranged coaxially with the shaft 1 so as to cover the shaft 1, and is provided with a pair of reduced-or small-diameter portions 7a, 7b, for example annular steps, in or at its axially opposite end portions. The outer diameter of each of the small-diameter portions 7a, 7b is dimensioned to permit it to accurately fit into its associated outer race ring 3 or 5b, respectively.

The outer diameter of the inner race ring 5a of the ball bearing unit 5 is equal to the outer diameter of the large-diameter portion 1a of the stepped-diameter shaft 1. Further, there is no difference between the outer and inner diameters of the outer race rings 5b and 3, so that the balls 4 and 6 are of the same diameter.

The balls 4, 6 are rotatably supported in ball cages or retainers 9, and travel in the annular inner and outer raceway grooves 2a, 2b, 8a and 8b of the bearing assembly.

In this embodiment, the inner race ring 5a of the ball bearing unit 5 is slidably mounted on the small-diameter portion 1b of the stepped-diameter shaft 1 in an insertion manner, and its outer end surface (i.e., right-hand side as viewed in Fig. 1) is subjected to a predetermined axially inward pre-load. Under such circumstances, the inner race ring 5a of the ball bearing unit 5 is bonded or anchored to the small-diameter portion 1b of the stepped-diameter shaft 1 by means of suitable adhesive or like connecting means, and/or is a press-or interference-fit thereon. Thus the components, such as the spacer 7, the outer race ring 3, and the ball bearing unit 5 are successively mounted on the shaft 1 to complete the bearing assembly.

Although the balls 4, 6 are of the same diameter in the above embodiment of the present invention, it is also possible to use any other balls which are different in diameter from the balls 4, 6. In other words, the balls used in the small-diameter portion 1b of the shaft 1 may be different in diameter from those associated with the large-diameter portion 1a of the shaft 1.

The bearing assembly embodying the present invention constructed as described above has the following actions and effects:
(1) Since the outer race ring 3, balls 4, spacer 7, ball bearing unit 5 and the stepped diameter shaft 1 are pre-assembled, for example by the bearing manufacturer, into the bearing assembly or unit, the user, for example the manufacturer of the computers and/or peripheral devices, is relieved of the cumbersome work of assembling the bearing assembly. The assembly may be easily mounted inside a sleeve-like rotating element by the user, by inserting the assembly into the rotating element and fixing the assembly therein;
(2) Since the bearing assembly uses a stepped-diameter shaft 1 provided with a large-diameter portion 1a having its outer peripheral surface directly formed with the annular inner raceway groove 2a, instead of a conventional type of inner race ring which would require the diameter of the shaft to be reduced, the rigidity of the shaft is improved;
(3) Since the stepped-diameter shaft 1 is provided with the large-diameter portion 1a and therefore possesses increased rigidity, it is possible to increase the resonance point of a spindle or drive motor which is associated with the bearing assembly and used in office automation instruments and like systems, so that the spindle motor may be prevented from resonating to, or inducing resonance in, the remaining components of the instruments, whereby these instruments are improved in reliability;
(4) The spacer 7 may be fabricated by a bearing maker so as to align with the ball bearing unit 5 and the outer race ring 3 with a high degree of accuracy. Further, the spacer 7 has its small-diameter annular portions 7a and 7b fitted in the outer race rings 3 and 5b, respectively. In other words, these components 7, 4, 5b are firmly united. As a result, the spacer 7 may be arranged coaxially with the stepped-diameter shaft 1 with a high degree of accuracy, which enables the vibration and noise of the bearing assembly to be considerably reduced; and
(5) The number of conventional ball bearing units used in the bearing assembly is reduced to one, i.e. the ball bearing unit 5. Consequently, the bearing assembly embodying the present invention uses only one inner race ring 5a, and the number of its components is therefore reduced in comparison with conventional bearing assemblies.

## Claims

1. A bearing assembly comprising:
a stepped-diameter shaft (1) provided with a portion (1a) having a larger diameter than another portion (1b) of the shaft, and an annular inner raceway groove (2a) formed directly in the outer peripheral surface of the larger-diameter portion (1a) ;
a first outer race ring (3) coaxially disposed around said larger-diameter portion (1a) of said stepped-diameter shaft and spaced apart therefrom to form an annular space therebetween, said first outer race ring (3) having its inner peripheral surface formed with an outer raceway groove (2b) ;
a plurality of first balls (4) rotatably mounted in said annular space, between and engaging the inner raceway groove (2b) in the shaft (1) and said annular outer raceway groove (2b) of said first outer race ring (3); and
a sleeve-like spacer (7) ;
a ball bearing unit (5) which has a second outer race ring (5b) and an inner race ring (5a) mounted on the smaller-diameter portion (1b) of said shaft (1), said spacer (7) being coaxially disposed around said shaft (1) while spaced apart therefrom, and extending axially between said first outer race ring (3) and said second outer race ring (5b) of said ball bearing unit (5) which is provided with a plurality of second balls (6) between said inner race ring (5a) and second outer race ring (5b) ;
whereby said first outer race ring (3), said spacer (7), said plurality of first balls (4), said ball bearing unit (5), and said shaft (1) are assembled into a bearing assembly,
**characterised in that** said spacer (7) is provided with a pair of reduced-diameter portions (7a, 7b) at its opposite axial end portions, one of the reduced-diameter portions (7a) having an outer diameter equal to an inner diameter of said first outer race ring (3) and being fitted in said first outer race ring (3) and the other reduced-diameter end portion (7b) having an outer diameter equal to an inner diameter of the second outer race ring (5b) of the ball bearing unit (5) and being fitted in said second outer race ring (5b) and one end surface of said spacer (7) is fitted closely to an axial end surface of said first outer race ring (3) and an opposite end surface of said spacer (7) is fitted closely to an axial end surface of said second outer race ring (5b).

2. The bearing assembly claimed in claim 1, wherein:
the outer diameter of said inner race ring (5a) of said ball bearing unit (5) is the same as that of said larger-diameter portion (1a) of said shaft (1); and
the outer and inner diameters of said second outer race ring (5b) of said ball bearing unit (5) are the same as those of said first outer race ring (3), respectively;
whereby said first and second balls (4, 6) are of the same diameter.

3. The bearing assembly claimed in claim 1 or 2, further comprising a ball retainer (9) coaxially and rotatably mounted in said annular space to rotatably retain said first balls (4) therein.

4. A bearing assembly as claimed in any preceding claim incorporated in a rotating portion of a computer or a peripheral device therefor.

5. A method of manufacturing a bearing assembly, comprising the steps of:
forming an annular inner raceway groove (2a) directly in the outer peripheral surface of a portion (1a) of a stepped-diameter shaft (1), which portion (1a) has a larger diameter than another portion (1b) of the shaft;
mounting a plurality of first balls (4) in an annular space defined between said annular inner raceway groove (2a) of said shaft (1) and an annular outer raceway groove (2b) formed in the inner peripheral surface of a first outer race ring (3) which is coaxially disposed around the larger-diameter portion (1a) of said shaft so as to be disposed opposite said annular inner raceway groove (2a) of said shaft;
coaxially mounting a sleeve-like spacer (7) around said shaft (1) so as to be spaced apart therefrom, said spacer (7) being provided with a pair of reduced-diameter portions (7a, 7b) at its axial end portions and having one of its reduced-diameter portions (7a) having an outer diameter equal to an inner diameter of said first outer race ring (3) and coaxially fitted in said first outer race ring (3) ;
slidably mounting the other of said reduced-diameter portions (7b) of said spacer having an outer diameter equal to an inner diameter of a second outer race ring (5b) of a ball bearing unit (5) provided with a plurality of second balls (6) and an inner ring (5a) in said second outer race ring (5b) said ball bearing unit (5) having its inner race ring (5a) slidably mounted on the smaller-diameter portion (1b) of said shaft (1);
closely fitting one end surface of said spacer (7) to an axial end surface of said first outer race ring (3) and closely fitting an opposite end surface of said spacer (7) to an axial end surface of said second outer race ring (5b); and
bonding or otherwise fixing said inner race ring (5a) of said ball bearing unit (5) to said smaller-diameter portion (1b) of said shaft by means of an adhesive or other connecting means in a condition in which a predetermined axially inward pre-load is applied to the outer end surface of said inner race ring (5a) or said second outer race ring (5b) of said ball bearing unit;
whereby said first outer race ring (3), said spacer (7), said plurality of first balls (4), said ball bearing unit (5) and said shaft (1) are assembled into a bearing assembly.

## Patentansprüche

1. Lagerung, umfassend:
- eine Welle (1) mit gestuftem Durchmesser, die mit einem Abschnitt (1a) versehen ist, der einen größeren Durchmesser als ein anderer Abschnitt (1b) der Welle und eine ringförmige innere Laufrille (2a) aufweist, die unmittelbar in der äußeren Umfangsfläche des Abschnitts (1a) mit dem größeren Durchmesser gebildet ist;
- einen ersten äußeren Laufring (3), der koaxial um den Abschnitt (1a) mit gröâerem Durchmesser der Welle mit gestuftem Durchmesser angeordnet ist und davon beabstandet ist, um dazwischen einen ringförmigen Zwischenraum zu bilden, wobei die innere Umfangsfläche des ersten äußeren Laufrings (3) mit einer äußeren Laufrille (2b) ausgebildet ist;
- eine Vielzahl erster Kugeln (4), die drehbar in dem ringförmigen Zwischenraum eingebaut sind, zwischen der inneren Laufrille (2b) in der Welle (1) und in diese eingreifend und der ringförmigen äußeren Laufrille (2b) des ersten äußeren Laufrings (3); und
- einen hülsenartiger Abstandshalter (7) ;
- eine Kugellagereinheit (5), die einen zweiten äußeren Laufring (5b) und einen inneren Laufring (5a) aufweist, der auf dem Abschnitt (1b) mit dem kleineren Durchmesser der Welle (1) angebracht ist, wobei der Abstandshalter (7) koaxial um die Welle (1) herum angeordnet ist, während er davon beabstandet ist und sich axial zwischen dem ersten äußeren Laufring (3) und dem zweiten äußeren Laufring (5b) der Kugellagereinheit (5) erstreckt, die mit einer Vielzahl zweiter Kugeln (6) zwischen dem inneren Laufring (5a) und dem zweiten äußeren Laufring (5b) versehen ist;
wodurch der erste äußere Laufring (3), der Abstandshalter (7), die Vielzahl erster Kugeln (4), die Kugellagereinheit (5) und die Welle (1) zu einer Lagerung zusammengebaut werden,
**dadurch gekennzeichnet, dass** der Abstandshalter (7) mit einem Paar Abschnitten (7a, 7b) mit reduziertem Durchmesser an seinen gegenüberliegenden axialen Endabschnitten versehen ist, wobei einer der Abschnitte (7a) mit reduziertem Durchmesser einen Außendurchmesser aufweist, der dem Innendurchmesser des ersten äußeren Laufrings (3) entspricht und in dem ersten äußeren Laufring (3) eingepasst ist, und der andere Endabschnitt (7b) mit reduziertem Durchmesser einen Außendurchmesser aufweist, der einem Innendurchmesser des zweiten äußeren Laufrings (5b) der Kugellagereinheit (5) entspricht und in dem zweiten äußeren Laufring (5b) eingepasst ist und eine Endoberfläche des Abstandshalters (7) nahe an der axialen Endoberfläche des ersten äußeren Laufrings (3) angepasst ist, und eine gegenüberliegende Endoberfläche des Abstandshalters (7) nahe an einer axialen Endoberfläche des zweiten äußeren Laufrings (5b) angepasst ist.

2. Lagerung nach Anspruch 1, wobei:
- der Außendurchmesser des inneren Laufrings (5a) der Kugellagereinheit (5) dem des Abschnitts (1a) mit dem größeren Durchmesser der Welle (1) entspricht; und
- die Außen- und Innendurchmesser des zweiten äußeren Laufrings (5b) der Kugellagereinheit (5) jeweils denen des ersten äußeren Laufrings (3) entsprechen;
wodurch die ersten und zweiten Kugeln (4, 6) den gleichen Durchmesser aufweisen.

3. Lagerung nach Anspruch 1 oder 2, ferner umfassend einen Kugelkäfig (9), der koaxial und drehbar in dem ringförmigen Zwischenraum eingebaut ist, um die ersten Kugeln (4) darin drehbar aufzunehmen.

4. Lagerung nach einem der vorhergehenden Ansprüche, die in einem drehenden Teil eines Computers oder einer Peripherievorrichtung dafür integriert ist.

5. Verfahren zur Herstellung einer Lagerung, umfassend folgende Schritte:
- Bilden einer ringförmigen inneren Laufrille (2a) unmittelbar in der äußeren Umfangsfläche eines Abschnitts (1a) einer Welle (1) mit gestuftem Durchmesser, wobei der Abschnitt (1a) einen größeren Durchmesser aufweist als ein anderer Abschnitt (1b) der Welle;
- Einbauen einer Vielzahl erster Kugeln (4) in einem ringförmigen Zwischenraum, der zwischen der ringförmigen inneren Laufrille (2a) der Welle (1) und einer ringförmigen äußeren Laufrille (2b) definiert ist, die in der inneren Umfangsfläche eines ersten äußeren Laufrings (3) ausgebildet ist, der koaxial um den Abschnitt (1a) mit größerem Durchmesser der Welle angeordnet ist, um gegenüber der ringförmigen inneren Laufrille (2a) der Welle angeordnet zu sein;
- koaxiales Einbauen eines hülsenartigen Abstandshalters (7) um die Welle (1), so dass dieser davon beabstandet ist, wobei der Abstandshalter (7) mit einem Paar Abschnitten (7a, 7b) mit reduziertem Durchmesser an seinen axialen Endabschnitten versehen ist und einer seiner Abschnitte (7a) mit reduziertem Durchmesser einen Außendurchmesser aufweist, der dem Innendurchmesser des ersten äußeren Laufrings (3) entspricht und koaxial in dem ersten äußeren Laufring (3) eingepasst ist;
- gleitendes Einbauen des anderen der Abschnitte (7b) mit reduziertem Durchmesser des Abstandshalters, der einen Außendurchmesser aufweist, der einem Innendurchmesser eines zweiten äußeren Laufrings (5b) einer Kugellagereinheit (5) entspricht, die mit einer Vielzahl zweiter Kugeln (6) und einem inneren Ring (5a) in dem zweiten äußeren Laufring (5b) versehen ist, wobei der innere Laufring (5a) der Kugellagereinheit (5) verschiebbar auf dem Abschnitt (1b) mit kleinerem Durchmesser der Welle (1) angebracht ist;
- enges Anpassen einer Endoberfläche des Abstandshalters (7) an eine axiale Endoberfläche des ersten äußeren Laufrings (3) und enges Anpassen einer gegenüberliegenden Endoberfläche des Abstandshalters (7) an eine axiale Endoberfläche des zweiten äußeren Laufrings (5b) ; und
- Verbinden oder anderweitiges Befestigen des inneren Laufrings (5a) der Kugellagereinheit (5) an dem Abschnitt mit kleinerem Durchmesser (1b) der Welle mittels eines Klebemittels oder anderer Verbindungsmittel in einem Zustand, in dem eine vorbestimmte axial nach innen gerichtete Vorspannkraft auf die äußere Endoberfläche des inneren Laufrings (5a) oder des zweiten äußeren Laufrings (5b) der Kugellagereinheit ausgeübt wird;
wodurch der erste äußere Laufring (3), der Abstandshalter (7), die Vielzahl erster Kugeln (4), die Kugellagereinheit (5) und die Welle (1) zu einer Lagerung zusammengebaut werden.

## Revendications

1. Ensemble de palier comprenant :
un arbre à diamètre étagé (1) muni d'une partie (1a) présentant un diamètre plus grand qu'une autre partie (1b) de l'arbre, et une gorge de chemin de roulement intérieur annulaire (2a) formée directement dans la surface périphérique extérieure de la partie de diamètre plus grand (1a),
une première bague extérieure (3) disposée coaxialement autour de ladite partie de diamètre plus grand (1a) dudit arbre à diamètre étagé et espacé de celui-ci pour former un espace annulaire entre eux, ladite première bague extérieure (3) ayant sa surface périphérique intérieure munie d'une gorge de chemin de roulement extérieur (2b),
une pluralité de premières billes (4) montées avec possibilité de rotation dans ledit espace annulaire, portant sur la gorge de chemin de roulement intérieur (2b) dans l'arbre (1) et sur ladite gorge de chemin de roulement extérieur annulaire (2b) de ladite première bague extérieure (3), et
une entretoise tubulaire (7),
une unité de roulement à billes (5) qui comporte une seconde bague extérieure (5b) et une bague intérieure (5a) montées sur la partie de diamètre plus petit (1b) dudit arbre (1), ladite entretoise (7) étant disposée coaxialement autour dudit arbre (1) tout en étant espacée de celui-ci, et s'étendant axialement entre ladite première bague extérieure (3) et ladite seconde bague extérieure (5b) de ladite unité de roulement à billes (5) qui est munie d'une pluralité de secondes billes (6) entre ladite bague intérieure (5a) et la seconde bague extérieure (5b),
grâce à quoi ladite première bague extérieure (3), ladite entretoise (7), ladite pluralité de premières billes (4), ladite unité de roulement à billes (5) et ledit arbre (1) sont assemblés en un ensemble de palier,
**caractérisé en ce que** ladite entretoise (7) est muni d'une paire de parties à diamètre réduit (7a, 7b) au niveau de ses parties d'extrémité axiales opposées, l'une des parties à diamètre réduit (7a) présentant un diamètre extérieur égal à un diamètre intérieur de ladite première bague extérieure (3), et étant logée dans ladite première bague extérieure (3), et l'autre partie d'extrémité à diamètre réduit (7b) présentant un diamètre extérieur égal à un diamètre intérieur de la seconde bague extérieure (5b) de l'unité de roulement à billes (5), et étant logée dans ladite seconde bague extérieure (5b), et une première surface d'extrémité de ladite entretoise (7) est ajustée à une surface d'extrémité axiale de ladite première bague extérieure (3), et une surface d'extrémité opposée dudit élément d'espacement (7) est ajustée à une surface d'extrémité axiale de ladite seconde bague extérieure (5b).

2. Ensemble de palier selon la revendication 1, dans lequel :
le diamètre extérieur de ladite bague intérieure (5a) de ladite unité de roulement à billes (5) est identique à celui de ladite partie (1a) de plus grand diamètre dudit arbre (1), et
les diamètres extérieur et intérieur de ladite seconde bague extérieure (5b) de ladite unité de roulement à billes (5) sont identiques à ceux de la première bague extérieure (3), respectivement,
grâce à quoi lesdites première et seconde billes (4, 6) sont de même diamètre.

3. Ensemble de palier selon la revendication 1 ou 2, comprenant en outre un élément de retenue de billes (9) monté coaxialement et avec possibilité de rotation dans ledit espace annulaire afin de retenir avec possibilité de rotation lesdites premières billes (4) dans celui-ci.

4. Ensemble de palier selon l'une quelconque des revendications précédentes, incorporé dans une partie rotative d'un ordinateur ou d'un dispositif périphérique pour celui-ci.

5. Procédé de fabrication d'un ensemble de palier, comprenant les étapes consistant à :
former une gorge de chemin de roulement intérieur annulaire (2a) directement dans la surface périphérique extérieure d'une partie (1a) d'un arbre à diamètre étagé (1), laquelle partie (1a) présente un diamètre plus grand qu'une autre partie (1b) de l'arbre,
monter une pluralité de premières billes (4) dans un espace annulaire défini entre ladite gorge de chemin de roulement intérieur annulaire (2a) dudit arbre (1) et une gorge de chemin de roulement extérieur annulaire (2b) formée dans la surface périphérique intérieure d'une première bague extérieure (3) qui est disposée coaxialement autour de la partie de diamètre plus grand (1a) dudit arbre de façon à être disposée en face de ladite gorge de chemin de roulement intérieur annulaire (2a) dudit arbre,
monter de façon coaxiale une entretoise tubulaire (7) autour dudit arbre (1) de façon à ce qu'elle soit espacée de celui-ci, ladite entretoise (7) étant munie d'une paire de parties à diamètre réduit (7a, 7b) au niveau de ses parties d'extrémité axiales et ayant l'une de ses parties à diamètre réduit (7a) présentant un diamètre extérieur égal à un diamètre intérieur de ladite première bague extérieure (3) et étant logée coaxialement dans ladite première bague extérieure (3),
monter avec possibilité de coulissement l'autre desdites parties à diamètre réduit (7b) de l'entretoise présentant un diamètre extérieur égal à un diamètre intérieur d'une seconde bague extérieure (5b) d'une unité de roulement à billes (5) munie d'une pluralité de secondes billes (6) et une bague intérieure (5a) dans ladite seconde bague extérieure (5b), ladite unité de roulement à billes (5) ayant sa bague intérieure (5a) montée avec possibilité de coulissement sur la partie à diamètre plus petit (1b) dudit arbre (1),
ajuster étroitement une première surface d'extrémité de l'entretoise (7) à une surface d'extrémité axiale de ladite première bague extérieure (3) et ajuster étroitement une surface d'extrémité opposée de l'entretoise (7) à une surface d'extrémité axiale de ladite seconde bague extérieure (5b), et
coller ou fixer d'une autre manière ladite bague intérieure (5a) de ladite unité de roulement à billes (5) à ladite partie de diamètre plus petit (1b) dudit arbre au moyen d'un adhésif ou d'un autre moyen de liaison dans un état dans lequel une précharge axiale vers l'intérieur prédéterminée est appliquée à la surface d'extrémité extérieure de ladite bague intérieure (5a) ou de ladite seconde bague extérieure (5b) de ladite unité de roulement à billes,
grâce à quoi ladite première bague extérieure (3), l'entretoise (7), ladite pluralité de premières billes (4), ladite unité de roulement à billes (5) et ledit arbre (1) sont montés en un ensemble de palier.
